# EUROPÄISCHE PATENTANMELDUNG

(11) **EP 3 613 681 A1**
(43) Veröffentlichungstag der Anmeldung: **26.02.2020**
(21) Anmeldenummer: 18190511.8
(22) Anmeldetag: 23.08.2018
(51) Int. Cl.: B65G 1/137, B07C 3/08, B65G 1/04

(54) **FLÄCHENSORTER ÜBER MINDESTENS ZWEI EBENEN**

(71) Anmelder: Siemens Aktiengesellschaft, 80333 München (DE)
(72) Erfinder: ENENKEL, Peter, 78462 Konstanz (DE); UMBACH, Max, 78464 Konstanz (DE)
(74) Vertreter: Maier, Daniel Oliver

(57) **Zusammenfassung**

Die Erfindung betrifft eine Vorrichtung und ein Verfahren zum Sortieren von Stückgütern (7). Ein zu sortierendes Stückgut (7) wird auf einer Abwurfebene (1) an eine Abwurfstelle (91) gefördert und dort in oder auf ein auf einer Auffangebene (2) verkehrendes, das Stückgut (7) aufnehmendes Aufnahmemittel (28) abgeworfen. Die Auffangebene (2) ist unter der Abwurfebene (1) angeordnet. Das Aufnahmemittel (8) legt auf der Auffangebene (2) eine individuell festlegbare Strecke zurück.

## Beschreibung

Die Erfindung bezieht sich auf das technische Gebiet der Sortierung von Stückgütern über mindestens zwei Ebenen.

Für die Verteilung, Sortierung oder Kommissionierung inhomogener Güter werden heute zur Einsparung der verfügbaren Fläche sogenannte Matrix- oder Planarsorter verwendet. Diese beruhen auf dicht gepackten planaren Förderelementen unterschiedlicher Bauart (beispielsweise Eckumsetzer, Lenkrollen, Omnirollen, Planar-Linear-Motoren) in einer Förderebene. Auf dieser Ebene werden passive Güter oder Lastaufnahmemittel (LAM) von den Eingabestellen auf freien oder kartesischen Bahnen an die Zielendstelle gefördert. Ein Nachteil dieser Systeme sind die erheblichen Kosten für die bodennah verbauten Förderelemente und der geringe Nutzungsgrad dieser selbst. Ein weiter Nachteil ist die durchsatzreduzierende Kreuzungsproblematik in einer Matrixebene. Besonders dann, wenn sehr viele Güter oder Transportelemente gleichzeitig gefördert beziehungsweise sortiert werden sollen.

Das Problem hoher Kosten und geringer Durchsätze wird heute primär versucht zu lösen durch:
- Erhöhte Dynamik des Systems und der verfahrbaren Elemente;
- Intelligente oder lernende Bahnsteuerungsalgorithmen;
- Erhöhter sensorischer Aufwand zur Lage- und Bewegungserkennung der sich auf der planaren Aktorenfläche befindenden Fördergüter.

Der Erfindung liegt daher die Aufgabe zugrunde, auf geringer Fläche Stückgüter effizient zu sortieren.

Diese Aufgabe wird durch die in den unabhängigen Patentansprüchen beschriebenen Lösungen gelöst. Vorteilhafte Ausgestaltungen der Erfindung sind in weiteren Ansprüchen angegeben.

Gemäß einem Aspekt wird ein Sortiersystem zum Sortieren von Stückgütern über mindestens zwei übereinander angeordnete Ebenen vorgestellt. Das Sortiersystem umfasst eine Abwurfebene, eine Auffangebene, ein Abwurfebenen-Fördermittel zum Fördern von Stückgütern auf der Abwurfebene und ein Auffangebenen-Fördermittel zum Fördern von Stückgütern auf der Auffangebene. Die Auffangebene ist unter der Abwurfebene angeordnet. Die Abwurfebene umfasst Abwurfstellen, via welche Stückgüter von der Abwurfebene auf die Auffangebene abgeworfen werden können. Beispielsweise sind die Abwurfstellen matrixartig als Löcher in der Abwurfebene ausgestaltet, durch welche Stückgüter von der Abwurfebene auf die Auffangebene abgeworfen werden können. Das Abwurfebenen-Fördermittel umfasst ein Abwurfmittel, das ausgestaltet ist, ein Stückgut via eine der Abwurfstellen abzuwerfen. Das Auffangebenen-Fördermittel umfasst ein Aufnahmemittel, das ausgestaltet ist, das via die Abwurfstelle abgeworfene Stückgut aufzunehmen. Das Auffangebenen-Fördermittel ist ausgestaltet, das Aufnahmemittel auf der Auffangebene eine individuell festlegbare Strecke zurücklegen zu lassen.

Gemäss einem weiteren Aspekt wird ein Verfahren zum Sortieren von Stückgütern vorgestellt. Ein zu sortierendes Stückgut wird für einen Sortierschritt auf einer Abwurfebene an eine Abwurfstelle gefördert und dort in oder auf ein auf einer unter der Abwurfebene angeordneten Auffangebene verkehrendes, das Stückgut aufnehmendes Aufnahmemittel abgeworfen. Dabei legt das Aufnahmemittel auf der Auffangebene eine individuell festlegbare Strecke zurück.

Auf diese Weise kann das Aufnahmemittel eine individuell festlegbare Strecke automatisiert zurücklegen um das via die Abwurfstelle abgeworfene Stückgut aufzunehmen oder aufzufangen. Dabei kann die individuell festlegbare Strecke beispielsweise mittels eines Steuerungssystems automatisch so gewählt werden, dass ein gewünschter Parameter optimiert wird. Beispielsweise kann eine schnelle Sortierung des Stückguts und/oder eine kurze Wegstrecke des Stückguts und/oder eine Vermeidung von Wegkreuzungen mit andern zu sortierenden Stückgütern und/oder eine Vermeidung von Wegkreuzungen einer Gesamtheit zu sortierender Stückgüter und/oder ein Gesamtdurchsatz des Sortierverfahrens optimiert werden.

Die individuell festlegbare Strecke kann zudem beispielsweise für den Weg des Aufnahmemittels zu der Abwurfstelle und/oder für den weiteren Weg des mit dem Stückgut beladenen Aufnahmemittels von der Abwurfstelle weg und/oder für die Sortierung des Stückguts und/oder für die Aufnahme des Stückguts individuell festgelegt werden.

Gemäss einem weiteren Ausführungsbeispiel wird die individuell festlegbare Strecke festgelegt, indem die Abwurfstelle via welche das Stückgut abgeworfen wird, individuell ausgewählt oder festgelegt wird, beispielsweise um die Wegstrecken gleichzeitig auf der Abwurfebene und/oder der Auffangebene geförderter Stückgüter zu koordinieren, beispielsweise um Kreuzungssituationen zu vermeiden.

Gemäss einem Ausführungsbeispiel legt das Aufnahmemittel auf der Auffangebene eine für den Sortierschritt oder für die Sortierung individuell festlegbare Strecke zurück.

Gemäss einem Ausführungsbeispiel ist das Abwurfebenen-Fördermittel ausgestaltet, das Stückgut auf der Abwurfebene zur Sortierung des Stückguts und/oder zum Abwerfen des Stückguts eine individuell festlegbare Strecke zurücklegen zu lassen. Dies erhöht weiter die Flexibilität des Sortiersystems sowie des Sortierverfahrens und die Möglichkeiten das Wegkreuzungen von zu sortierenden Stückgütern zu vermeiden.

Gemäss einem weiteren Ausführungsbeispiel wird das Stückgut mittels eines auf der Abwurfebene verkehrenden Aufnahmemittels zu der Abwurfstelle gefördert und dort von dem Abwurfebenen-Aufnahmemittel in oder auf das sich auf der Auffangebene verkehrende Aufnahmemittel abgeworfen. Dabei können auf der Abwurfebene und auf der Auffangebene dieselbe Art Fördermittel und dieselbe Art Aufnahmemittel verwendet werden, wodurch sich synergistische Effekte hinsichtlich Investitionskosten und Wartung ergeben. Alternativ dazu können aber auch unterschiedliche Aufnahmemittel auf der Abwurfebene und auf der Auffangebene verwendet werden. Dies ist beispielsweise dann von Vorteil, wenn die Aufnahmemittel der Auffangebene Endstellen sind, da in diesen die Stückgüter vorzugsweise sortiert gesammelt werden, während auf darüber angeordneten Abwurfebenen die Aufnahmemittel noch nicht oder nicht vollständig sortiert sind sondern der weiteren Sortierung dienen, und daher nicht als Sammelmittel dienen müssen. Gemäss einem Ausführungsbeispiel nimmt daher gemäss dem Verfahren das Aufnahmemittel nur einzelnes Stückgut auf, respektive ist das Sortiersystem ausgestaltet ein einzelnes Stückgut in das Aufnahmemittel abzuwerfen, das dann auch einzeln von dem Aufnahmemittel weiter transportiert wird.

Gemäss einem weiteren Ausführungsbeispiel legt das auf der Abwurfebene verkehrende Aufnahmemittel eine zur Sortierung des Stückguts individuell festlegbare Strecke zurück. Mit andern Worten legt das Stückgut auf diese Weise auf der Abwurfebene die individuell festlegbare Strecke zu der Abwurfstelle hin und/oder von der Abwurfstelle weg in dem Abwurfebenen-Aufnahmemittel zurück.

Gemäss einem weiteren Ausführungsbeispiel umfasst das Sortiersystem eine weitere Abwurfebene und ein weiteres Fördermittel zum Fördern von Stückgütern auf der weiteren Abwurfebene. Die weitere Abwurfebene ist oberhalb der Abwurfebene angeordnet und umfasst weitere Abwurfstellen. Das weitere Fördermittel ist ausgestaltet, das Stückgut via eine der weiteren Abwurfstellen in das Abwurfebenen-Aufnahmemittel abzuwerfen. Beispielsweise sind die weiteren Abwurfstellen als Löcher in der Abwurfebene ausgestaltet, durch welche Stückgüter von der weiteren Abwurfebene auf die Abwurfebene abgeworfen werden können. Das Abwurfebenen-Fördermittel umfasst ein Abwurfebenen-Aufnahmemittel. Das Abwurfebenen-Aufnahmemittel ist ausgestaltet, das von der weiteren Abwurfebene abgeworfene Stückgut beispielsweise direkt aufzunehmen oder aufzufangen. Auf diese Weise kann die Flexibilität des Sortiersystems weiter erhöht werden, indem über mindestens drei Ebenen sortiert wird, und es können zusätzliche Kreuzungssituationen vermieden werden.

Gemäss einem weiteren Ausführungsbeispiel legt das Stückgut legt auf der Abwurfebene die individuell festlegbare Strecke zu der Abwurfstelle hin und/oder von der Abwurfstelle weg in dem Abwurfebenen-Aufnahmemittel zurück.

Gemäss einem Ausführungsbeispiel wird das Stückgut, bevor es auf der Abwurfebene gefördert wird, für einen weiteren Sortierschritt auf der weiteren Abwurfebene an eine weitere für das Stückgut individuell auswählbare Abwurfstelle gefördert und dort in oder auf das auf der Abwurfebene verkehrende Aufnahmemittel abgeworfen.

Gemäss weiteren Ausführungsbeispielen umfasst das auf der Auffangebene verkehrende Aufnahmemittel und/oder das auf der Abwurfebene verkehrende Aufnahmemittel und/oder das auf der weiteren Ebene verkehrende Aufnahmemittel einen Behälterwagen.

Gemäss weiteren Ausführungsbeispielen umfasst der oder umfassen die Behälterwagen das Abwurfmittel, beispielsweise eine Falltür, eine Klappe, eine Schaufel, oder einen Rollboden. und vorzugsweise fünfseitig geschlossen ist, oder einen anderweitig geeigneten Abwurfschacht.

Gemäss weiteren Ausführungsbeispielen ist das auf der Auffangebene verkehrende Aufnahmemittel über in der Auffangebene angeordnete Aktoren antreibbar. Auch können das auf der Abwurfebene verkehrende Aufnahmemittel und/oder das auf der weiteren Ebene verkehrende Aufnahmemittel über in der AbwurfEbene und/oder in der der weiteren Abwurfebene angeordneten Aktoren antreibbar sein. Aktoren können beispielsweise Linearmotoren, Rollen, oder Bänder sein. Die Aufnahmemittel können daher passiv ausgestaltet werden, also ohne eigenen Antrieb ausgestaltet sein. Die hat den Vorteil niedriger Kosten für die Aufnahmemittel.

Gemäss weiteren Ausführungsbeispielen umfasst das auf der Auffangebene verkehrende Aufnahmemittel und/oder das auf der Abwurfebene verkehrende Aufnahmemittel und/oder das auf der weiteren Ebene verkehrende Aufnahmemittel einen Antrieb zur Fortbewegung. Mit andern Worten können diese Aufnahmemittel aktiv angetrieben sein. Vorteilhaft daran ist, dass nicht zwingend in den Sortierebenen stationäre Aktoren verbaut werden müssen, und dadurch initiale Investitionskosten geringer sein können und sich Vorteile bei der Skalierbarkeit des Sortiersystems ergeben.

Gemäss einem weiteren Ausführungsbeispiel umfasst das Sortiersystem ein Steuerungssystem, das adaptiert ist, das Abwurfebenen-Fördermittel und das Auffangebenen-Fördermittel so zu steuern, dass das durch das Abwurfmittel abgeworfene Stückgut durch das Aufnahmemittel aufgefangen wird.

Gemäss weiteren Ausführungsbeispielen ist das Steuerungssystem adaptiert, die individuell festlegbare Strecke des Aufnahmemittels auf der Auffangebene und/oder die individuell festlegbare Strecke des Stückguts auf der Abwurfebene und/oder eine individuell festlegbare Strecke des Stückguts durch das Sortiersystem und/oder eine Abwurfstelle via welche das Stückgut abgeworfen wird individuell festzulegen. Dies ermöglicht es, Strecken von Stückgütern durch das Sortiersystem individuell festzulegen, um die Sortiergeschwindigkeit zu optimieren und/oder um zu vermeiden, dass sich durch das Sortiersystem transportierte Güter kreuzen. Das Sortiersystem, respektive das Verfahren zum Sortieren von Stückgütern ist automatisiert und führerlos.

Gemäss weiteren Ausführungsbeispielen ist das Steuerungssystem adaptiert, für mehrere Stückgüter die gleichzeitig durch das Sortiersystem sortiert werden zurückzulegende Strecken und/oder Abwurfstellen koordiniert festzulegen, beispielsweise um Kreuzungsereignisse zu vermeiden und/oder Wegstrecken kurz zu halten.

Gemäss weiteren Ausführungsbeispielen ist das auf der Auffangebene verkehrende Aufnahmemittel und/oder das auf der Abwurfebene verkehrende Aufnahmemittel und/oder das auf der weiteren Abwurfebene verkehrende Aufnahmemittel einen Behälterwagen, der den als Abwurfmittel ausgestalteten Abwurfmechanismus umfasst, beispielsweise eine Falltür, eine Klappe, eine Schaufel, oder einen Rollboden.

Gemäss weiteren Ausführungsbeispielen umfasst das Sortiersystem mindestens zwei übereinander angeordnete Ebenen über welche Stückgüter sortiert werden, wobei auf den mindestens zwei Ebenen Aufnahmemittel verkehren, die zur Sortierung der Stückgüter individuell festlegbare Strecken zurücklegen. Diese Ebenen können gitterartig angeordnete Abwurfstellen umfassen.

Gemäss einem weiteren Ausführungsbeispiel ist das auf der Auffangebene verkehrende Aufnahmemittel eine Endstelle.

Gemäss weiteren Ausführungsbeispielen wird das Stückgut über die Abwurfebene und die Auffangebene, sowie optional weitere zu diesen Ebenen vertikal unterhalb oder oberhalb angeordnete Ebenen und darauf verkehrenden Aufnahmemitteln sortiert, wobei auf der untersten dieser Ebenen verkehrende Aufnahmemittel als Endstellen ausgestaltet sind. Die Endstellen können optional ebenfalls über individuell festlegbare Strecken zu einem Zielpunkt gefördert werden. Eine Endstelle ist vorzugsweise ausgestaltet, mehrere Stückgüter aufzunehmen, beispielsweise mit derselben Destination. Optional sind dann Aufnahmemittel einer oder mehreren über der als Endstellenebene ausgestalteten Auffangebene angeordneten Abwurfebene die über der Endstellenebene angeordnet sind Sortierelemente, von denen weiter sortiert wird. Diese Aufnahmemittel nehmen im Sortierbetrieb vorzugsweise maximal ein Stückgut auf, können in alternativen Ausführungsformen aber auch mehrere Stückgüter aufnehmen.

Gemäss einem weiteren Ausführungsbeispiel ist das Auffangebenen-Fördermittel und/oder das Abwurfebenen-Fördermittel und/oder das weitere Fördermittel ausgestaltet, das Stückgut in oder auf dem Aufnahmemittel zu fördern.

Gemäss einem weiteren Ausführungsbeispiel sind die Abwurfstellen als Löcher in der Abwurfebene und/oder sind die Abwurfstellen der weiteren Abwurfebene als Löcher in weiteren Abwurfebene ausgestaltet, durch welche Stückgüter abwerfbar sind.

Die Erfindung wird nachfolgend anhand der Zeichnung beispielsweise näher erläutert. Dabei zeigen:
Figuren 1A-C zeigen eine schematische Seitenansicht eines Sortiersystems sowie eines Verfahrens zum Sortieren von Stückgütern gemäss einem Ausführungsbeispiel der Erfindung;
Figuren 2A und 2B zeigen eine schematische Seitenansicht eines Sortiersystems sowie eines Verfahrens zum Sortieren von Stückgütern gemäss einem Ausführungsbeispiel der Erfindung.
Figur 3 zeigt eine schematische Seitenansicht eines Sortiersystems sowie eines Verfahrens zum Sortieren von Stückgütern gemäss einem Ausführungsbeispiel der Erfindung;
Figur 4 zeigt schematisch eine oberste Ebene des Sortiersystems von Figur 3 in einer Draufsicht;
Figur 5 zeigt schematisch eine mittlere Ebene des Sortiersystems von Figur 3 in einer Draufsicht;
Figur 6 zeigt schematisch eine unterste Ebene des Sortiersystems von Figur 3 in einer Draufsicht.
Figur 7 zeigt schematisch ein abklappbares Förderbandelement für die in Figur 4 dargestellte oberste Ebene;
Figur 8 zeigt eine perspektivische Ansicht einer Variante eines Sortiersystems von Figur 3.

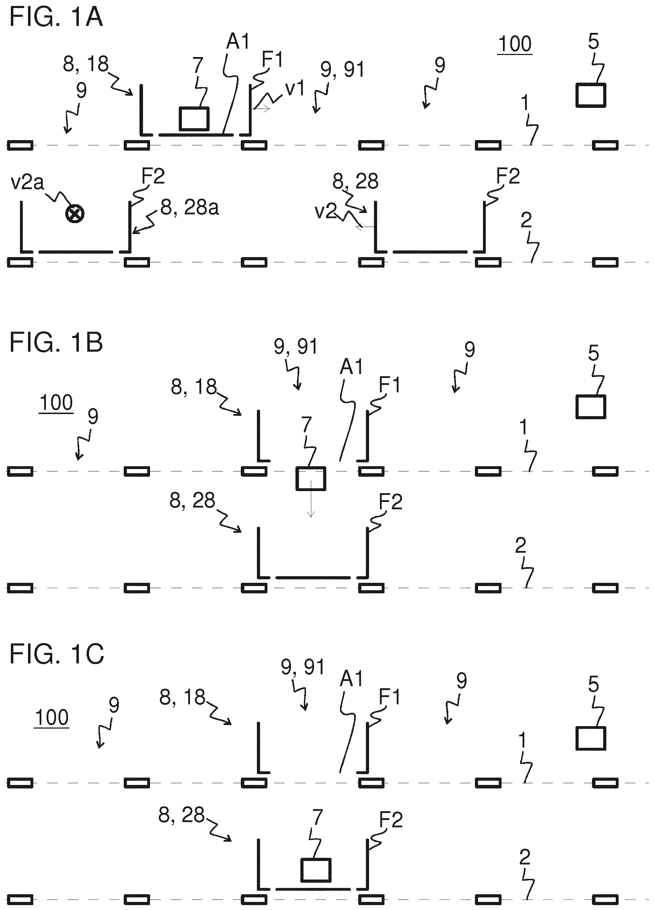

Die Figuren 1A, 1B, 1C zeigen eine schematische Seitenansicht eines Sortiersystems 100 sowie ein Verfahren zum Sortieren von Stückgütern gemäss einem Ausführungsbeispiel der Erfindung.

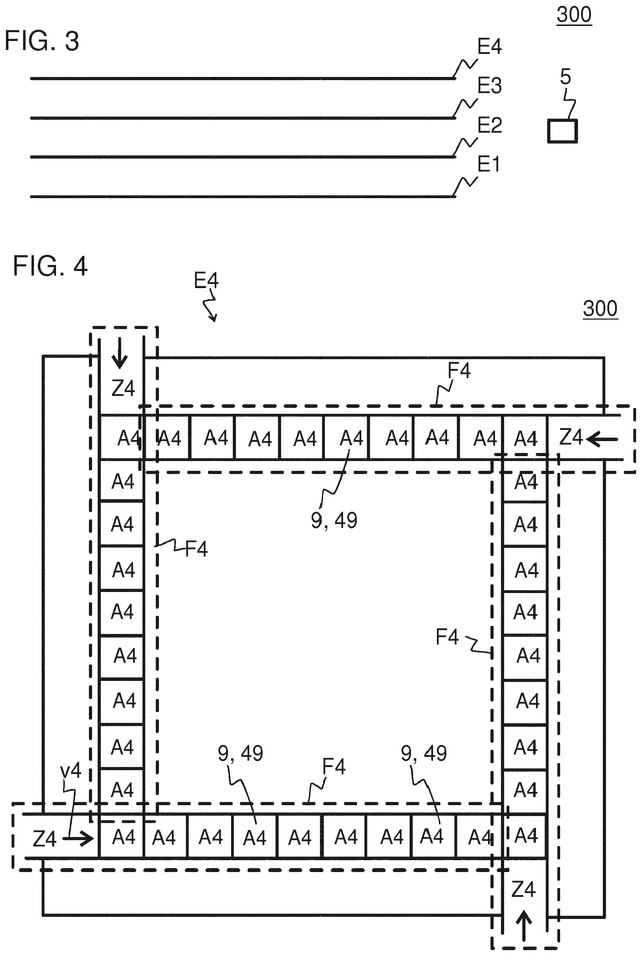

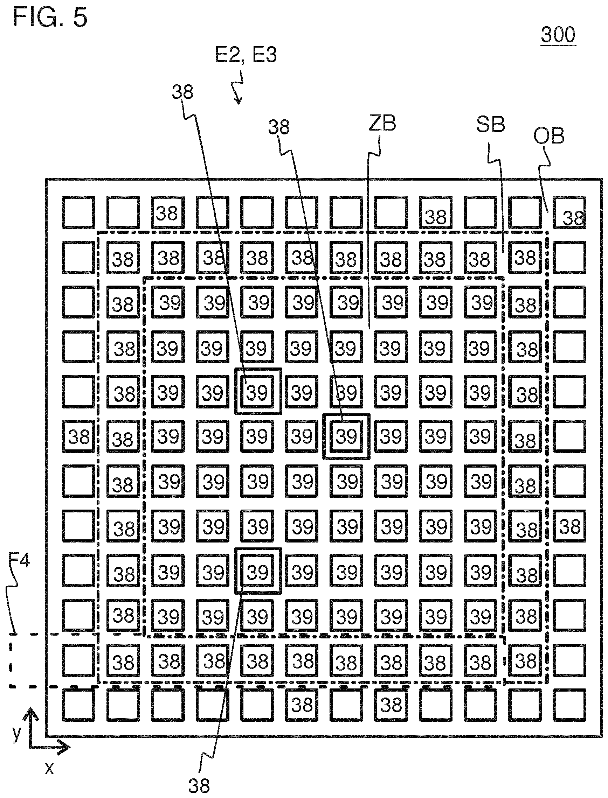

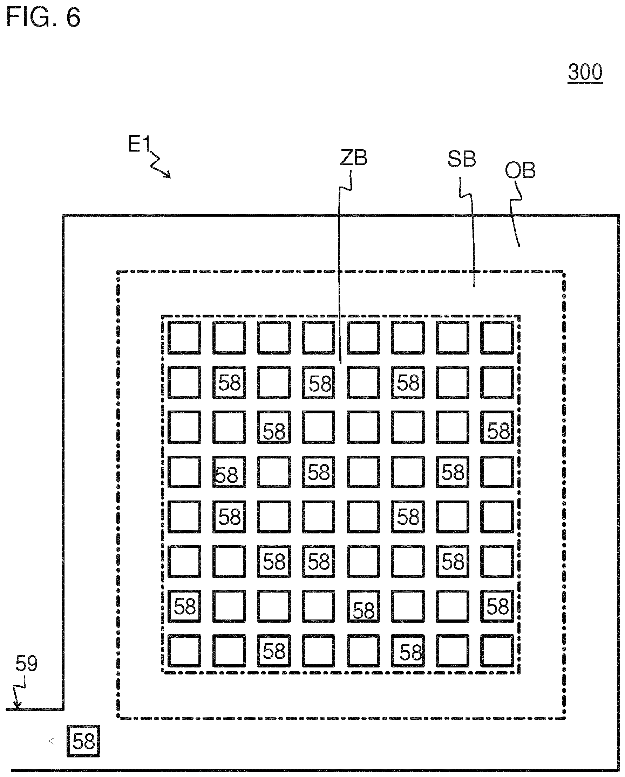

Das Sortiersystem 100 umfasst eine Abwurfebene 1, ein Auffangebene 2, ein Abwurfebenen-Fördermittel F1 zum Fördern von Stückgütern auf der Abwurfebene 1 und ein Auffangebenen-Fördermittel F2 zum Fördern von Stückgütern auf der Auffangebene 2, sowie ein Steuerungssystem 5 durch welches die Fördermittel F1, F2 ansteuerbar sind. Die Abwurfebene 1 und die Auffangebene 2 sind horizontal angeordnet. Die Abwurfebene 1 ist senkrecht über der Auffangebene 2 angeordnet. Die Abwurfebene 1 umfasst matrixartig angeordnete Abwurfstellen 9, die als Aussparungen in der Abwurfebene 1 ausgestaltet sind, und durch welche Stückgüter auf die Auffangebene 2 abgeworfen werden können. Figur 5 zeigt eine Draufsicht auf eine mögliche Ausgestaltung der Abwurfebene 1 sowie der Auffangebene 2. Figur 4 zeigt eine mögliche Variante einer Abwurfebene mit abklappbaren Förderelementen. Figur 6 zeigt eine Variante einer Auffangebene 2.

Wiederum mit Verweis auf die Figuren 1A-C umfassen die Fördermittel F1, F2 jeweils mindestens ein als Behälter ausgestaltetes Aufnahmemittel 8. Die Aufnahmemittel 8 der Aufnahmeebene 2 sind auch mit dem Bezugszeichen 28, 28a versehen, Aufnahmemittel der Abwurfebene 1 mit dem Bezugszeichen 18. In dem in den Figuren 1A-C dargestellten Ausführungsbeispiel sind für das Fördermittel F2 zwei Aufnahmemittel 28, 28a dargestellt, während für das Fördermittel F1 nur ein Aufnahmemittel 18 dargestellt ist. Vorzugsweise umfassen jedoch beide Fördermittel F1, F2 jeweils eine Vielzahl von Aufnahmemitteln 8, die in Zusammenarbeit untereinander eine Pluralität von Stückgütern gleichzeitig sortieren oder Sortierschritte für die Pluralität von Stückgütern gleichzeitig vornehmen. Die Aufnahmemittel 8, 18, 28, 28a sind durch die Fördermittel F1, F2 in den Ebenen 1, 2 förderbar. Die Bewegung der Aufnahmemittel 8 ist in Figur 1A durch deren Geschwindigkeitsvektoren v1, v2, v2a symbolisiert. In diesem Ausführungsbeispiel ist ein Fördermittel F1, F2 ausgestaltet zu einem gegebenen Zeitpunkt ein Aufnahmemittel 8, 18, 28, 28a in eine von zwei orthogonal zueinander liegenden Richtungen in den Ebenen 1, 2 zu fördern. In andern Ausführungsbeispielen ist ein Fördermittel F1, F2 ausgestaltet ein Aufnahmemittel 8, 18, 28, 28a in eine beliebige Richtung in den Ebenen 1, 2 zu fördern.

Gemäss einer Variante umfasst das Fördermittel F1 und/oder das Fördermittel F2 jeweils einen oder mehrere mobile Behälterwagen mit jeweils einem eigenem Antrieb und einem als Behälter ausgestalteten Aufnahmemittel 18, 28, 28a. Beispielsweise können die Antriebe elektrische Antriebsmaschinen sein.

Gemäss einer anderen Variante umfasst das Fördermittel F2 in oder auf der Auffangebene 2 verbaute Aktoren und passive Aufnahmemittel. Die passiven passiven Aufnahmemittel umfassen keinen eigenen Antrieb. Beispielsweise können die in die Auffangebene 2 fest verbauten Aktoren angetriebene Rollenbahnen oder Bänder sein, welche als Behälter ausgestaltete Aufnahmemittel in der Auffangebene 2 antreiben. Ebenso kann das Fördermittel F1 in die Abwurfebene 1 solche fest verbauten Aktoren umfassen, welche die passiv ausgestalteten Aufnahmemittel 18 fördern.

Auch können als Fördermittel F1 und/oder F2 Linearmotoren verwendet werden, die entsprechend ausgestaltete Behälterwagen antreiben.

Ebenso sind in weiteren Ausführungsbeispielen Mischformen mit unterschiedlichen Fördermitteln auf den Ebenen 1, 2 möglich, wie später anhand der in den Figuren 3-8 gezeigten Ausführungsbeispiele weiter gezeigt wird, wo auf vier Ebenen E1-E4 zwischen unmittelbar vertikal benachbarten Ebenen manchmal unterschiedliche Arten von Fördermitteln und manchmal dieselbe Art von Fördermitteln verwendet werden.

In einem von dem in den Figuren 1A-C etwas abweichenden Ausführungsbeispiel ist das Abwurfebenen-Fördermittel als Förderstrecke oder als Förderstreckensystem ausgestaltet, welches die Stückgüter nicht in einem Aufnahmemittel, sondern direkt aufliegend auf der Förderstrecke, beispielsweise einem Förderband fördert und ein Stückgut bei der gewünschten Abwurfstelle 91 auf die Auffangebene 2 abwirft. Dies ist besonders dann nützlich, wenn die Stückgüter vor der Sortierung vereinzelt werden, wie im Rahmen von weiteren Ausführungsbeispielen im Zusammenhang mit Figur 4 noch weiter erläutert wird.

Die Figuren 1A-C illustrieren auch ein Verfahren zum Sortieren von Stückgütern gemäss einem Ausführungsbeispiel der Erfindung zu unterschiedlichen Verfahrenszeitpunkten.

In Figur 1A ist dargestellt, wie das Abwurfebenen-Fördermittel F1 das Stückgut 7 auf der Abwurfebene 1 an eine für das Stückgut 7 individuell auswählbare Abwurfstelle 91 der Abwurfstellen 9 fördert, was durch den Geschwindigkeitsvektor v1 des Aufnahmemittels 18 symbolisiert ist, während das Auffangebenen-Fördermittel F2 ein leeres Aufnahmemittel 28 auf der Auffangebene 2 unter die Abwurfstelle 91 fördert, was durch den Geschwindigkeitsvektor v2 symbolisiert ist.

In beiden Ebenen 1, 2 sind weitere Aufnahmemittel unterwegs um andere Stückgüter zu sortieren, was durch das das Aufnahmemittel 28a symbolisiert ist, das sich mit der Geschwindigkeit v2a in eine andere Richtung bewegt. Die Aufnahmemittel 28, 28a können sich in der Auffangebene 2 in zwei orthogonal zueinander angeordneten Richtungen bewegen. Auch verkehren in der Abwurfebene 1 vorzugsweise mehrere Aufnahmemittel 8, die sich in der Abwurfebene 1 in den zwei orthogonal zueinander liegende Richtungen bewegen können.

Die Figuren 1B und 1C zeigen, wie bei der Abwurfstelle 91 das Stückgut 7 durch die Abwurfstelle 91 hindurch in das auf der Auffangebene 2 verkehrende Aufnahmemittel 28 abgeworfen und von diesem direkt aufgefangen wird. Für diesen Sortierschritt legt das Aufnahmemittel 28 auf der Auffangebene 2 abhängig von weiteren zur selben Zeit auf der Ebene 1 und/oder der Ebene 2 geförderten Stückgütern eine individuell festlegbare Strecke zurück.

Die individuell festlegbare Strecke wird für den Weg des Aufnahmemittels 28 zu der Abwurfstelle 91 hin und/oder für den weiteren Weg des mit dem Stückgut beladenen Aufnahmemittels 28 von der Abwurfstelle 91 weg individuell festgelegt, beispielsweise einer Streckenwahl folgend, die andern auf der Ebene 2 verkehrenden Aufnahmemitteln ausweicht und/oder Kreuzungen mit diesen und damit verbundene Verzögerungen vermeidet und/oder die Streckenlänge minimiert. Vorzugsweise legt jedes einer Pluralität von auf der Auffangebene 2 verkehrenden Aufnahmemitteln jeweils eine individuell festgelegte Strecke zurück, wobei die individuell festgelegten Strecken koordiniert festgelegt werden um Kreuzungen zu vermeiden und/oder die Anzahl Kreuzungen zu sortierender Stückgüter zu minimieren und/oder zurückgelegte Wegstrecken von Stückgütern oder Aufnahmemitteln zu minimieren.

Die Strecke welche das Stückgut 7 auf der Abwurfebene 1 zurücklegt braucht nicht zwingend individuell festlegbar zu sein, gemäss einer Ausführungsform der Erfindung ist jedoch auch diese Strecke individuell festlegbar, wodurch sich die Flexibiliät des Verfahrens sowie der Vorrichtung weiter erhöht.

Gemäss einem weiteren Ausführungsbeispiel wird die Abwurfstelle, zu welcher das Stückgut auf der Abwurfebene 1 gefördert und via welche das Stückgut abgeworfen wird ebenfalls individuell festgelegt, beispielsweise um eine Kreuzungssituation mit einem anderen oder mehreren anderen auf der Abwurfebene und/oder auf der Auffangebene geförderter Stückgüter zu vermeiden.

In den Figuren 1A-C ist ein Sortiersystem mit zwei Ebenen 1, 2 dargestellt. In diesem Sinne illustrieren diese Figuren Ausführungsbeispiele mit genau zwei Ebenen, nämlich der Abwurfebene 1 und der Auffangebene 2. Die Figuren 1A-C illustrieren gleichzeitig aber auch Sortiersysteme mit mehr als zwei Ebenen, sowie Verfahren, welche über mehr als zwei Ebenen sortieren, da die in den Figuren 1A-C illustrierten Konzepte nicht auf nur zwei Ebenen beschränkt sind. Mit andern Worten: Gemäss weiteren Ausführungsbeispielen sind die in den Figuren 1A-C gezeigten Konzepte in Systemen mit drei oder auch mehr Ebenen implementiert. Auch brauchen die in den Figuren 1A-C gezeigten Konzepte nicht ausschliesslich zwischen unmittelbar benachbarten Ebenen stattzufinden, sondern es können für einen Abwurf eines Stückguts in ein Aufnahmemittel auch eine oder mehrere Ebenen übersprungen werden indem ein Stückgut durch zwei oder mehr Ebenen hindurch abgeworfen wird, beispielsweise wenn die Abwurfstellen dieser Ebenen übereinander angeordnet sind.

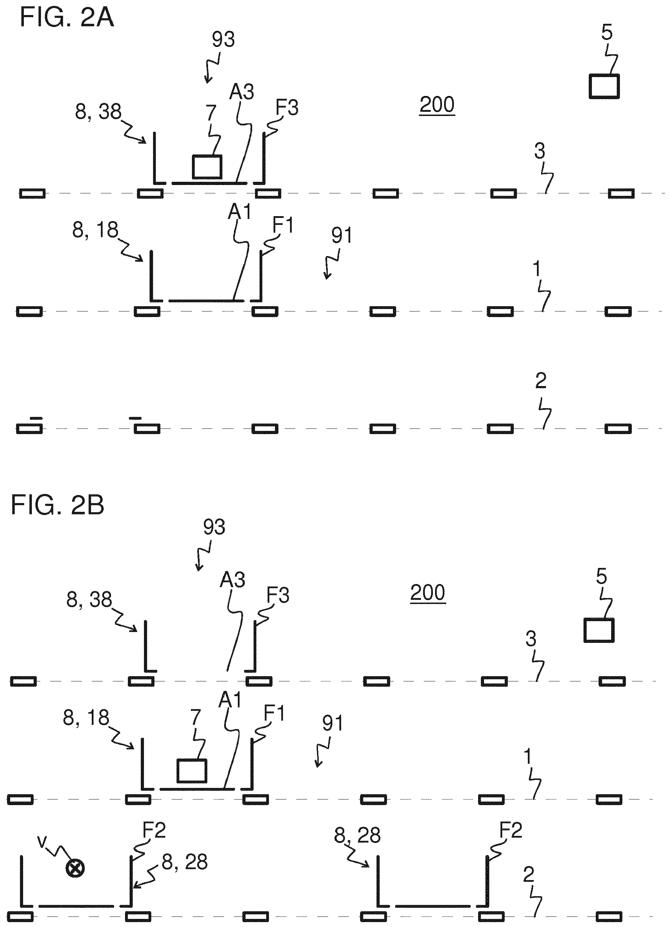

Die Figuren 2A und 2B illustrieren ein weiteres Ausführungsbeispiel eines Sortiersystems 200 sowie eines Verfahrens zum Sortieren von Stückgütern. Das Sortiersystem 200 umfasst drei Ebenen 1, 2, 3. Das Sortiersystem 200 umfasst die Ebenen 1, 2 entsprechend dem in Figuren 1A-C dargestellten Ausführungsbeispiel. Über der Abwurfebene 2 ist eine weitere Abwurfebene 3 angeordnet, die gleich ausgestaltet ist wie die Abwurfebene 1. Auf allen drei Ebenen verkehren vorzugsweise mehrere Stückgüter, respektive mehrere Aufnahmemittel 8 gleichzeitig. Figur 2A zeigt wie das Stückgut 7 in einer auf der weiteren Abwurfebene 3 durch das weitere Fördermittel F3 in einem weiteren Aufnahmemittel 38 zu einer weiteren Abwurfstelle 93 gefördert wurde. Das Steuerungssystem 5 ist adaptiert die Fördermittel F1, F2, F3 anzusteuern. In einer Variante dieses Ausführungsbeispiels wird anstelle des Fördermittels F3 für die weitere Abwurfebene 3 ein Förderstreckensystem verwendet, das mittels einer oder mehrerer Förderstrecken, beispielsweise Förderbändern oder Rollenbahnen das Stückgut 7 zu der Abwurfstelle 93 fördert und dort beispielsweise mittels eines abklappbaren Förderbandes auf die Abwurfebene 1 abwirft.

Nachdem das Stückgut 7 auf der weiteren Abwurfebene 3 zu der weiteren Abwurfstelle 93 mittels eines der oben beschriebenen Fördermittel F3 gefördert wurde, wird es also durch die Abwurfstelle 93 hindurch in das Aufnahmemittel 18 geworfen und von diesem aufgenommen.

Anschliessend wird das Stückgut gemäss dem anhand der Figuren 1A-C beschriebenen Verfahren über die Ebenen 1, 2 weiter sortiert. Dabei legt das Aufnahmemittel 18 zur Aufnahme des durch die Abwurfstelle 93 abgeworfenen Stückguts 7 eine individuell festgelegte Strecke zurück. Die individuelle Festlegung dieser Strecke wird abhängig von weiteren gleichzeitig durch das Sortiersystem 200 geförderten Stückgütern vorgenommen. Dies erlaubt es die Strecken die eine Vielzahl von durch das Sortiersystem geförderten Stückgütern koordiniert festzulegen und so das Sortiersystem, respektive das Sortierverfahren zu optimieren.

Die Wegstrecken werden beispielsweise individuell festgelegt um die Sortiergeschwindigkeit zu optimieren, Kreuzungssituationen zu vermeiden und/oder durch Stückgüter und/oder Aufnahmemittel zurückgelegte Distanzen zu optimieren.

Wie anhand von Ebene 1 des Sortiersystems 200 ersichtlich wird, kann eine Abwurfebene gemäss Ausführungsbeispielen also gleichzeitig eine Auffangebene sein und umgekehrt kann auch eine Auffangebene eine Abwurfebene sein.

Anstelle von oder zusätzlich zu der über der Ebene 1, 2 angeordneten weiteren Abwurfebene 3, kann sich auch unter der Auffangebene 2 eine oder mehrere weitere Ebenen befinden über welche sortiert wird, und/oder über der weiteren Abwurfebene 3 kann sich eine oder mehrere weitere Ebenen befinden über die sortiert wird.

Ein Aufnahmemittel 8, 18, 28, 38 kann beispielsweise ein fünfseitig geschlossener Behälter sein, der durch geeignete Aktoren angetrieben wird. Der Behälter kann aktiv angetrieben sein, beispielsweise indem er Teil eines Automated Guided Vehicle ist. Ebenso kann das Aufnahmemittel passiv sein, also keinen eigenen Antrieb umfassen und beispielsweise als einfacher Behälter ausgestaltet sein, der durch angetriebene Rollenbahnen oder Förderbänder, die in den Ebenen 1, 2, 3 verbaut sind, gefördert wird. Auch Lösungen mit Behälterwagen die durch Linearmotoren angetrieben werden sind möglich.

Auf einer Abwurfebene 1, 3, also auf einer Ebene von der Stückgüter auf eine tiefer liegende Ebene abgeworfen werden, umfassen die Aufnahmemittel vorzugsweise einen Abwurfmechanismus A1, A3 über welchen ein Stückgut via eine Abwurfstelle auf abgeworfen wird. Die unterste Ebene kann, aber muss keinen Abwurfmechanismus umfassen und kann beispielsweise als Auffangmittel Endstellen mit je einem grossen Auffangsack zur Aufnahmen mehrerer Stückgüter umfassen.

Mit den anhand von Figuren 2A und 2B illustrierten Sortiersystemen wird das Stückgut über mehr als zwei übereinander angeordnete Ebenen sortiert. Auf diesen Ebenen verkehren jeweils Aufnahmemittel, die individuell festlegbare Strecken zurücklegen.

Die Figuren 3-8 illustrieren beispielhaft weitere Ausführungsbeispiele eines Sortiersystems 300 sowie eines Verfahrens zum Sortieren von Stückgütern.

Wie in Figur 3 gezeigt umfasst das Sortiersystem 300 vier vertikal übereinander angeordnete horizontale Ebenen E1-E4, und ein Steuerungssystem 5 zum Steuern und koordinieren von auf diesen Ebenen E1-E4 operierenden Fördermitteln F1-F4. Die Ebenen E1-E4 sind parallel zueinander angeordnet.

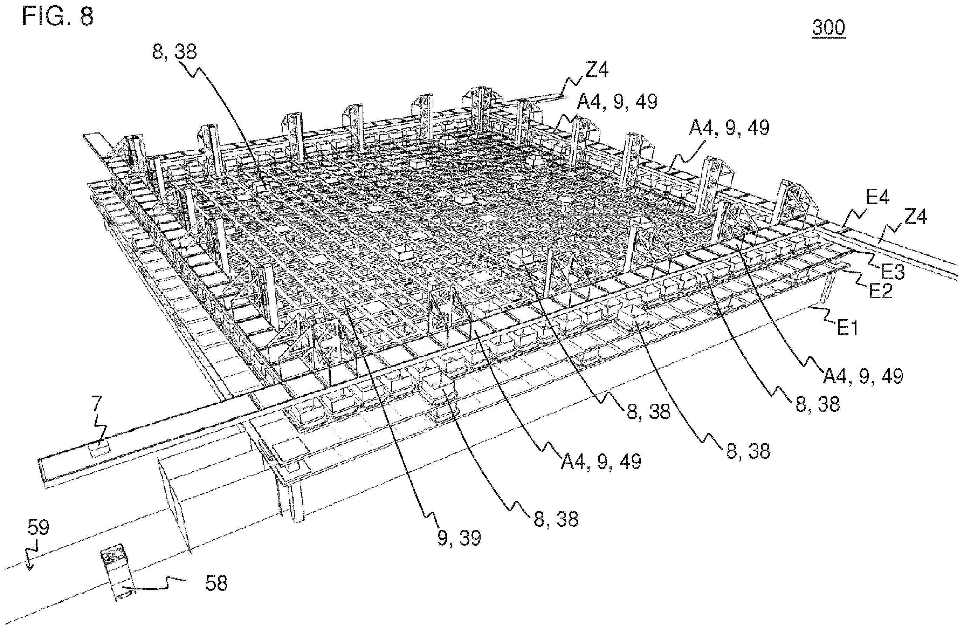

Figur 8 zeigt eine Variante des Sortiersystems 300 in einer perspektivischen Ansicht mit den vier Ebenen E1-E4. Die Ebenen E1-E4 sind matrixartig aufgebaut. Die oberste Ebene E4 umfasst ein Förderbandsystem mit Förderbandelementen A4 und Zufuhrförderbändern Z4, während die darunter liegenden Ebenen E3, E2, E1 Fördermittel zum Fördern von als Auffangmitteln 8 ausgestalteten Behältnissen umfassen. Zumindest ein Teil der Förderbandelemente A4 in der Ebene E4 sind als abklappbare Abwurfstellen 49 ausgestaltet, während die als Behältnisse 38 ausgestalteten Aufnahmemittel 8 der Ebenen E3, E2 einen Boden mit einem Abwurfschacht umfassen, der für den Abwurf eines Stückguts geöffnet werden kann und für eine spätere Aufnahme eines weiteren Stückguts wieder geschlossen werden kann. Die Ebenen E3 und E2 umfassen matrixartig angeordnete Aussparungen 39, durch welche die Stückgüter von den Aufnahmemitteln 38 auf tiefere Ebenen abgeworfen werden können. Auf der Ebene E1 verkehrt eine Pluralität von als Endstellen 58 ausgestalteten Aufnahmemitteln 8, in welchen die Stückgüter sortiert aufgefangen werden und die über einen Ausgang 60 aus dem Sortiersystem 300 gefördert werden.

Die Ebene E4 ist daher als Abwurfebene ausgestaltet. Die Ebenen E3, E2 sind sowohl als Abwurfebene, als auch als Auffangebene ausgestaltet. Die Ebene E1 ist als Auffangebene ausgestaltet.

Der in Figur 8 gezeigte martixartige Aufbau der Ebenen E1-E4 basiert auf einer für die Darstellung auf Papier grossen Matrix. Um die Funktionsweise der Ebenen E1-E4 und der in diesen Ebenen E1-E4 verwendeten Mittel besser darstellen und erklären zu können, sind die in den Figuren 4-6 dargestellten Ebenen E1-E4 schematisch am Beispiel einer kleineren Matrix, nämlich einer 12x12 Matrix dargestellt. Andere Matrixanordnungen sind in vielfältiger Weise ebenfalls möglich, beispielsweise braucht die Matrixanordnung nicht quadratisch zu sein, sondern kann auch einen andern Aufbau, beispielsweise einen rechteckigen Aufbau aufweisen mit einer unterschiedlichen Anzahl Matrixelementen in x-Richtung als in y-Richtung.

Figur 4 zeigt schematisch die Ebene E4 in einer Draufsicht. Die Ebene E4 umfasst vier als Förderstrecken F4 ausgestaltete Fördermittel, die ausgestaltet sind Stückgüter in der jeweils angegebenen Pfeilrichtung zu fördern, beispielsweise in eine Richtung v4, wie für eine der dargestellten Förderstrecken F4 dargestellt ist. Die Förderstrecken F4 umfassen je ein Zufuhrförderband Z4, das ausgestaltet ist der Ebene E4 Stückgüter, die an dieser Stelle vorzugsweise bereits vereinzelt sind oder vereinzelt werden, zuzuführen. Jedem der Zufuhrförderbänder Z4 sind weitere Förderbandelemente A4 nachgeordnet, die ausgestaltet sind, die Stückgüter weiter zu fördern. In der in Figur 4 dargestellten Ausführungsvariante sind die Förderstrecken F4 so angeordnet, dass sie in einem Randbereich der Ebene E4 eine umlaufende Struktur bilden. Eine umlaufende Struktur ist jedoch nicht notwendig. Die Ebene E4 kann in andern Ausführungsbeispielen auch nur eine der Förderstrecken F4 oder mehrere der Förderstrecken F4 oder eine oder mehrere anders angeordnete Förderstrecken aufweisen.

Die Förderbandelemente A4, oder zumindest eines oder mehrere der Förderbandelemente A4 sind abklappbar ausgestaltet, so dass wenn eines der Förderbandelemente A4 abgeklappt wird, ein sich darauf befindendes Stückgut auf die darunter liegende Ebene E3 abgeworfen wird. Mit andern Worten: Die abklappbaren Förderbandelemente A4 bilden Abwurfstellen 9, 49 (von denen in Figur 4 und in Figur 8 der Übersichtlichkeit halber nur einzelne mit diesen Bezugszeichen versehen sind), durch welche ein Stückgut auf eine tiefer liegende Ebene E3, E2, E1 abgeworfen werden kann.

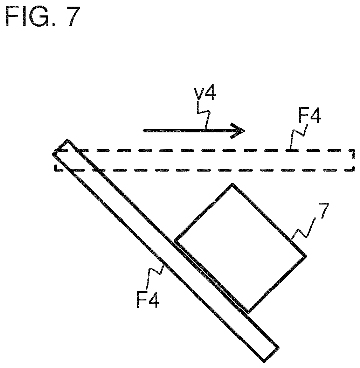

Figur 7 zeigt eine Ausführung eines abklappbaren Förderbandelementes F4 in durchgezogenen Linien in einem abgeklappten Zustand und in gestrichelten Linien in einem nicht abgeklappten Zustand. Das Förderbandelement F4 umfasst einen Abwurfmechanismus, welcher eine in Förderrichtung v4 zuvorderst liegende Kante des Förderbandelements F4 nach unten klappen lässt, wie in Figur 7 dargestellt.

Figur 5 illustriert die Ebene E3 des Sortiersystems 300. Das Sortiersystem 300 umfasst ein Fördersystem, das ausgestaltet ist, ein Auffangmittel auf matrixartig aufgebauten Strecken in der Ebene E3 zu fördern. Das in Figur 5 gezeigte Ausführungsbeispiel zeigt wie weiter oben bereits festgestellt eine 12x12 Matrix.

Die Ebene E3 kann auf einfache Weise beispielsweise mittels eines matrixartig in der Ebene E3 horizontal angeordneten Trägersystems mit in x- Richtung und orthogonal dazu in y-Richtung verlaufenden Trägern realisiert werden. Die Träger definieren Bahnen, auf denen sich autonome fahrerlose Fahrzeuge (Automated Guided Vehicles, AGVs) mit einem oben offenen und ansonsten fünfseitig geschlossenen Behälter in x-Richtung oder in y-Richtung bewegen können. Zwischen den Trägern sind rechteckige Leerräume in der Ebene E3, die mögliche Abwurfstellen 39 zum Abwerfen von Stückgütern auf die darunter liegenden Ebenen E2 und E1 definieren. Die AGVs sind oder umfassen als Fördermittel ausgestaltete Antriebe, sowie als Aufnahmemittel 8 ausgestaltete fünfseitig geschlossene Behälter 38, die oben offen sind.

Anstelle von AGVs können aber auch andere Fördermittel und Aufnahmemittel auf der Ebene E3 verwendet werden. In einer Variante umfassen Fördermittel auf der Ebene E3 aber beispielsweise auch matrixartig angeordnete fest installierte Förderbandelemente und Behälter. Jedes dieser Förderbandelemente ist ausgestaltet, ein sich auf dem Förderelement befindendes als Behälter ausgestaltetes Aufnahmemittel wahlweise in kartesischen Richtungen zu fördern, also wahlweise entweder in einer x-Richtung oder in einer zur x Richtung orthogonal verlaufenden y-Richtung. Auf jedem der in Figur 5 dargestellten 12x12=144 Matrixfelder ist ein solches Förderelement installiert. Zumindest dort wo für das Fördersystem 300 Abwurfstellen definiert sind, sind diese Förderbandelemente so ausgestaltet, dass sie in der Mitte eine Aussparung aufweisen, durch welche ein Stückgut auf eine tiefer liegende Ebene abgeworfen werden kann.

Gemäss einer bevorzugten Ausführungsvariante ist die Matrix der Ebene E3 in verschiedene Bereiche unterteilt, die für unterschiedliche Funktionen vorgesehen sind, beispielsweise in die folgenden drei Bereiche ZB, SB, OB, die in Figur 5 durch strichpunktierte Linien voneinander abgegrenzt sind: Die Ebene E3 umfasst in einem zentralen Bereich ZB die Abwurfstellen 39, durch welche ein Stückgut auf die darunter liegenden Ebenen E2, E1 abwerfbar ist. Der zentrale Bereich ZB ist in Figur 3 dadurch ersichtlich, dass dort alle Matrixfelder mit dem Bezugszeichen 39 versehen sind, welche die Abwurfstellen 39 kennzeichnen. In Figur 5 ist der zentrale Bereich beispielsweise als 8x8 Matrix dargestellt. Um diesen zentralen Bereich ZB herum umlaufend und unmittelbar unter den abklappbaren Förderbandelementen A4 der Fördermittel F4 der Ebene E4 ist auf der Ebene E3 ein Speicherbereich SB vorgesehen. Zur besseren Visualisierung ist in Figur 5 eine vertikale Projektion eines der Fördermittel F4 auf die Ebene E3 als gestrichelter Linienzug dargestellt. Auf Matrixfeldern des Speicherbereichs SB befinden sich leere Auffangmittel 38, welche die von den abklappbaren Förderbandelementen A4 abgeworfenen Stückgüter auffangen. Der Speicherbereich SB ist der zweitäusserste Bereich. Vorzugsweise ist jedes der Matrixfelder des Speicherbereichs SB nur möglichst kurze Zeit nicht durch ein leeres Auffangmittel 38 belegt. Daher sind in Figur 5 in dem Speicherbereich SB alle Matrixfelder als mit einem Auffangmittel 38 belegt dargestellt.

Um eine möglichst gute Belegung des Speicherbereichs SB sicherzustellen, kann in der Ebene E3 hierzu um den Speicherbereich SB herum ein äusseren Bereich OB vorgesehen sein auf dem einzelne leere Aufnahmemittel 38 verkehren und sobald ein im Speicherbereich SB wartendes Aufnahmemittel 38 ein Stückgut aufgenommen hat, dessen frei gewordenen Platz belegt. Dies stellt sicher, dass im Speicherbereich SB nur möglichst kurze Zeit Matrixfelder leer, also nicht durch ein leeres Auffangmittel 38 belegt sind. Dies ermöglicht es die Effizienz des Sortiersystems 300 weiter zu erhöhen. Aber auch dynamischere Lösungen, in denen die Auffangmittel 38 nicht im Speicherbereich SB warten, sondern mit dem gezielt zu einem von einem der Förderbandelemente A4 abgeworfenen Stückgut gefördert werden und dieses auf der Ebene E3 aufzufangen, sind möglich.

Zur Sortierung der Stückgüter legen die Aufnahmemittel 38 individuell festlegbare Strecken auf der Ebene E3 zurück. Mit andern Worten: Die Ebene E4 ist eine Abwurfebene und die Ebene E3 ist eine Auffangebene, auf der mindestens ein Aufnahmemittel 38 verkehrt, in welches ein Stückgut von dem Fördermittel F4 abgeworfen wird. Auf der Auffangebene E3 legen die Aufnahmemittel 38 zur Sortierung der zu sortierenden Stückgüter individuell festgelegte Strecken zurück um die Stückgüter in dem Speicherbereich SB aufzufangen und/oder um die Stückgüter weiter zu fördern und im zentralen Bereich abzuwerfen. Auf diese Weise kann für eine Vielzahl von gleichzeitig zu sortierenden Stückgütern das Sortiersystem 300, respektive der Sortiervorgang optimiert werden, beispielsweise um eine gegebene grosse Anzahl Stückgüter möglichst effizient und/oder schnell zu sortieren. Um den Sortiervorgang noch effizienter gestalten zu können, legt dabei das Stückgut 7 auch auf der Ebene E4 eine individuell festlegbare Strecke beispielsweise zu einer individuell zu bestimmenden Abwurfstelle 9 auf der Ebene E4 zurück um das Stückgut in ein besonders geeignetes der Aufnahmemittel 38 auf der Ebene E3 abzuwerfen.

Wenn das Stückgut 7 von einem der Aufnahmemittel 38 auf der Ebene E3 aufgenommen wurde, wird das Stückgut in diesem Aufnahmemittel 38 in den zentralen Bereich der Ebene E3 über eine individuell festlegbare Strecke zu einer individuell festlegbaren Abwurfstelle 39 der Ebene E3 gefördert und dort über einen Abwurfmechanismus, beispielsweise einen öffenbaren und wieder verschliessbare Abwurfschacht in dem Behälter 38 auf die Ebene E2 oder die Ebene E1 abgeworfen. Das frei gewordene Aufnahmemittel 38 auf der Ebene E3 begibt sich dann wieder an eine leere Stelle des Speicherbereichs SB.

Die Ebene E2 ist konstruktiv gleich aufgebaut wie die Ebene E3, also mit deckungsgleich zur Ebene E2 matrixartig angeordneten Trägerbahnen, und einer Aufteilung in die drei Bereiche ZB, SB, OB, sowie weiteren auf der Ebene E2 verkehrenden Aufnahmemitteln 8, die identisch zu den Aufnahmemitteln der Ebene E3 sein können.

Im Unterschied zur Ebene E3 fangen die Aufnahmemittel 8 auf der Ebene E2 im zentralen Bereich ZB unterhalb der Abwurfstellen 9 von der Ebene E3 durch die Abwurfstellen 9 abgeworfene Stückgüter auf. Dazu legt ein auf der der Ebene E2 verkehrendes Aufnahmemittel 8 eine individuell festlegbare Strecke zurück. Auf diese Weise kann die Flexibilität des Sortiersystems 300 weiter erhöht werden, beispielsweise indem die individuell festlegbaren Strecken bei einer gleichzeitigen Sortierung einer grossen Anzahl Stückgüter auf eine möglichst kurze Sortierdauer für die Gesamtheit zu sortierender Stückgüter optimiert wird.

Figur 6 zeigt die unterste Ebene E1 des Sortiersystems 300. Auf der Ebene E1 befinden sich oder verkehren als Endstellen 58 ausgestaltete Aufnahmemittel 8. Von den Aufnahmemitteln 8 auf der Ebene E2, optional auch von Aufnahmemitteln 38 der Ebene E3, werden in dem zentralen Bereich Stückgüter 7 nach mindestens einem vorgegebenen Sortierkriterium direkt in eine der Endstellen 58 abgeworfen. Beispielsweise repräsentiert jede der Endstellen 58 eine Postleitzahl oder einen Zustellbezirk nach welchen die Stückgüter, beispielsweise Pakete, sortiert werden.

Eine Endstelle 58 wird, beispielsweise wenn sie voll ist, oder wenn der Sortiervorgang beendet ist, oder zu einem vorgegebenen Zeitpunkt über einen Ausgang 59 aus dem Sortiersystem 300 gefördert. Dazu kann ein weiteres Fördermittel vorgesehen sein. Beispielsweise kann ein Aufnahmemittel 58 als Behälter ausgestaltet sein, unter welchen ein AGV fahrbar ist, wobei das AGV über einen Hebemechanismus verfügt, welches das Aufnahmemittel 58 anhebt und auf diese Weise an eine gewünschte Stelle fördert. Auch werden leere Endstellen 58 auf diese Weise, also mittels Anheben und Fördern durch ein AGV, auf einem gewünschten Matrixfeld unter einer Abwurfstelle positioniert. Dabei legt die Endstelle 58 auf der Ebene E4 eine individuell festlegbare Strecke zurück, beispielsweise um Kollisionen zu verhindern, oder bei hohem Paketaufkommen für einen bestimmten Zustellbereich redundante Endstellen für diesen Zustellbereich in der Ebene E4 bereitzustellen, oder um unter eine individuell festgelegte Abwurfstelle gefördert zu werden.

Ein weiteres Ausführungsbeispiel stellt ein Matrixsorter mit drei Ebenen dar, der nur die drei Ebenen E4, E3, E1, nicht aber die Ebene E2 umfasst. Dabei werden die zu sortierenden Stückgüter von dem Förderbandsystem F4 wie schon weiter oben beschrieben in die Aufnahmemittel 38 auf der Ebene E3 abgeworfen und von diesen aufgenommen. Von den Aufnahmemitteln 38 werden die Stückgüter dann direkt in die Entstellen 58 einsortiert.

Gemäss Ausführungsbeispielen sind die Ebenen E1-E4, sowie die Ebenen 1-3 vorzugsweise parallel zueinander angeordnet.

Gemäss einem Ausführungsbeispiel umfasst eine Anwendung einer kartesischen Matrix-Sorters für die Sortierung von Stückgütern beispielsweise kleiner Größe (Kleingutsorter).

Gemäss einem Ausführungsbeispiel werden die Güter zunächst konventionell vereinzelt und in passive oder selbstfahrende Behälterwagen geschwindigkeitssynchron abgeworfen.

Die passiven Behälterwagen werden durch linear wirkende Aktoren (Linearmotoren, Rollen, Bänder) aktiv auf mehreren Matrixsystemebenen gefördert.

Die Behälterwagen haben eine Falltür (Klappe, Schaufel, Rollboden), über die das Gut nach unten abgeworfen und somit abgegeben werden kann. Diese z.B. Falltürarretierung ist z.B. federnd vorgespannt und wird an der Übergabestelle von außen oder intern ausgelöst. Durch das erneute Verfahren des Wagens wird die Klappe wieder extern oder intern geschlossen und verriegelt.

Über mehrere Ebenen von Verfahrwagen oder sonstigen förderbaren Aufnahmemitteln werden die Stückgüter gutschonend in einen in einer bodennahem Matrix verfahrbaren Rollwagen mit einem eingespannten Gebinde (Sack) abgeworfen und so zum Zielpunkt gefördert, sortiert oder kommissioniert. Die Verfahrwagen oder sonstigen förderbaren Aufnahmemittel lassen sich mit minimalen horizontalen und/oder vertikalen Abständen anordnen oder fördern.

Weitere Ausführungsbeispiele umfassen:
- eine Wegverkürzung und Senkung der durchsatzreduzierenden Kreuzungsevents durch entgegenkommende Endstellen beispielsweise auf der Ebene E1, die ihrerseits in einer Fördermatrix unterhalb von Aufnahmemitteln auf einer anderen Ebene liegen (Multi-Level-Matrix);
- eine Wegverkürzung durch entgegenkommende zusätzliche Zwischenlastaufnahmemittel, beispielsweise auf der Ebene E2 und E3 auf mehreren unterhalb und in Fallrichtung des Gutes liegenden Ebenen;
- eine erhebliche Reduzierung der durchsatzreduzierenden Kreuzungsevents durch mindestens eine Zwischenebene, beispielsweise E2 oder E3;
- einen zuverlässigen Transport inhomogener postalischer Güter über 5 seitig geschlossene Behälterwagen (Bomb-Bay);
- eine Möglichkeit einer sehr hohen Transportgeschwindigkeit und Beschleunigung der Güter durch die kastenförmige Behälterform.

## Patentansprüche

1. Sortiersystem (100, 200, 300) zum Sortieren von Stückgütern (7) über mindestens zwei übereinander angeordnete Ebenen (1, 2), umfassend eine Abwurfebene (1), eine Auffangebene (2), ein Abwurfebenen-Fördermittel (F1, F4) zum Fördern von Stückgütern (7) auf der Abwurfebene (1) und ein Auffangebenen-Fördermittel (F2) zum Fördern von Stückgütern auf der Auffangebene (2);
wobei die Auffangebene (2) unter der Abwurfebene (1) angeordnet ist;
wobei die Abwurfebene (1) Abwurfstellen (9, 91) umfasst, via welche Stückgüter von der Abwurfebene (1) auf die Auffangebene (2) abgeworfen werden können;
wobei das Abwurfebenen-Fördermittel (F1, F4) ein Abwurfmittel (A1, A4) umfasst, das ausgestaltet ist, ein Stückgut via eine der Abwurfstellen (9, 91) abzuwerfen;
und wobei das Auffangebenen-Fördermittel (F2) ein Aufnahmemittel (8, 28) umfasst, das ausgestaltet ist, das via die Abwurfstelle (9, 91) abgeworfene Stückgut (7) aufzunehmen; wobei das Auffangebenen-Fördermittel (F2) ausgestaltet ist, das Aufnahmemittel (8, 28) auf der Auffangebene (2) eine individuell festlegbare Strecke zurücklegen zu lassen.

2. Sortiersystem nach Anspruch 1, wobei das Abwurfebenen-Fördermittel (F1) ausgestaltet ist, das Stückgut (7) auf der Abwurfebene (1) eine individuell festlegbare Strecke zurücklegen zu lassen.

3. Sortiersystem nach einem der vorhergehenden Ansprüche, umfassend eine weitere Abwurfebene (3) und ein weiteres Fördermittel (F3) zum Fördern von Stückgütern auf der weiteren Abwurfebene (3);
wobei die weitere Abwurfebene (3) oberhalb der Abwurfebene (1) angeordnet ist;
wobei das Abwurfebenen-Fördermittel (F1) ein Abwurfebenen-Aufnahmemittel (18) umfasst, das ausgestaltet ist, das Stückgut aufzunehmen;
wobei die weitere Abwurfebene (3) weitere Abwurfstellen (9) umfasst, und das weitere Fördermittel (F3) ausgestaltet ist, das Stückgut via eine der weiteren Abwurfstellen (9) in das Abwurfebenen-Aufnahmemittel (18) abzuwerfen.

4. Sortiersystem nach einem der vorhergehenden Ansprüche, wobei das auf der Auffangebene (2) verkehrende Aufnahmemittel (28) und/oder das auf der Abwurfebene verkehrende Aufnahmemittel (18) und/oder das auf der weiteren Ebene verkehrende Aufnahmemittel (38) mindestens einen Behälterwagen (8) umfasst, der einen Abwurfmechanismus (A), beispielsweise einen Falltür, Klappe, Schaufel, oder einen Rollboden umfasst und vorzugsweise 5-seitig geschlossen ist.

5. Sortiersystem nach einem der vorhergehenden Ansprüche, wobei das auf der Auffangebene (2) verkehrende Aufnahmemittel (28) und/oder das auf der Abwurfebene (1) verkehrende Aufnahmemittel (18) und/oder das auf der weiteren Ebene verkehrende Aufnahmemittel (38) über in der Auffangebene (2) und/oder in der Abwurf-Ebene (1) und/oder in der der weiteren Abwurfebene (3) angeordneten Aktoren, wie beispielsweise Rollen, Bänder antreibbar ist.

6. Sortiersystem nach einem der vorhergehenden Ansprüche, wobei das auf der Auffangebene (2) verkehrende Aufnahmemittel (28) einen eigenen Antrieb zur Fortbewegung und/oder das auf der Abwurfebene (1) verkehrende Aufnahmemittel (18) einen eigenen Antrieb zur Fortbewegung und/oder das auf der weiteren Ebene (3) verkehrende Aufnahmemittel (38) einen eigenen Antrieb zur Fortbewegung umfasst.

7. Sortiersystem nach einem der vorhergehenden Ansprüche, umfassend ein Steuerungssystem (5), das adaptiert ist, die individuell festlegbare Strecke des Aufnahmemittels auf der Auffangebene und/oder die individuell festlegbare Strecke des Stückguts (7) auf der Abwurfebene und/oder eine individuell festlegbare Strecke des Stückguts durch das Sortiersystem und/oder die Abwurfstelle (91) auf der Abwurfebene (1) und/oder die weitere Abwurfstelle auf der weiteren Abwurfebene (3) auszuwählen.

8. Sortiersystem nach einem der vorhergehenden Ansprüche, wobei das Steuerungssystem (5) adaptiert ist, für mehrere Stückgüter (7) die gleichzeitig durch das Sortiersystem sortiert werden zurückzulegende Strecken und/oder Abwurfstellen koordiniert festzulegen.

9. Verfahren zum Sortieren von Stückgütern (7),
wobei ein zu sortierendes Stückgut (7) auf einer Abwurfebene (1) an eine Abwurfstelle (91) gefördert und dort in oder auf ein auf einer Auffangebene (2) verkehrendes, das Stückgut (7) aufnehmendes Aufnahmemittel (28) abgeworfen wird, wobei die Auffangebene (2) unter der Abwurfebene (1) angeordnet ist, und wobei das Aufnahmemittel (8) auf der Auffangebene (2) eine zur Sortierung des Stückguts (7) individuell festlegbare Strecke zurücklegt.

10. Verfahren nach Anspruch 9, wobei das Stückgut (7) mittels eines auf der Abwurfebene (1) verkehrenden Aufnahmemittels (18) zu der Abwurfstelle (91) gefördert und dort in oder auf das auf der Auffangebene (2) verkehrende Aufnahmemittel (28) abgeworfen wird, und/oder das auf der Abwurfebene (1) verkehrende Aufnahmemittel (18) eine zur Sortierung des Stückguts (7) individuell festlegbare Strecke zurücklegt.

11. Verfahren nach einem der Ansprüche 9 oder 10, wobei das Stückgut (7), bevor es auf der Abwurfebene (1) gefördert wird, auf einer über der Abwurfebene angeordneten weiteren Abwurfebene an eine weitere Abwurfstelle (93) gefördert und dort in oder auf das auf der Abwurfebene (1) verkehrende Aufnahmemittel (8) abgeworfen wird.

12. Verfahren nach einem der Ansprüche 9 bis 11, wobei das auf der Auffangebene (2) verkehrende Aufnahmemittel und/oder das auf der Abwurfebene (1) verkehrende Aufnahmemittel (18) und/oder ein auf der weiteren Abwurfebene verkehrendes Aufnahmemittel einen Behälterwagen umfasst ist, der einen Abwurfmechanismus, beispielsweise einen Falltür, eine Klappe, eine Schaufel, oder einen Rollboden umfasst, der ausgestaltet ist, das Stückgut abzuwerfen.

13. Verfahren nach einem der Ansprüche 9 bis 12, wobei das Stückgut 7 über zwei oder mehr übereinander angeordnete Ebenen sortiert wird, auf denen jeweils Aufnahmemittel verkehren, die individuell festlegbare Strecken zurücklegen.

14. Verfahren nach einem der Ansprüche 9 bis 13, wobei das auf der Auffangebene (2) verkehrende Aufnahmemittel (28) eine Endstelle ist.

15. Verfahren nach einem der Ansprüche 9 bis 14, umfassend den Verfahrensschritt eines Auswählens der Abwurfstelle (91) aus einer Pluralität von auf der Abwurfebene (1) angeordneten Abwurfstellen (9) und/oder umfassend den Verfahrensschritt eines Auswählens der weiteren Abwurfstelle (93) aus einer weiteren Pluralität von auf der weiteren Abwurfebene (3) angeordneten Abwurfstellen (9).
